# EUROPEAN PATENT APPLICATION

(11) **EP 4 623 787 A1**
(43) Date of publication of application: **01.10.2025**
(21) Application number: 24775044.1
(22) Date of filing: 16.01.2024
(51) Int. Cl.: A47L 9/28, A47L 9/04, H02K 7/14, H02K 9/14, H02K 9/04, H02K 5/20, H02K 9/08, H02K 9/16

(54) **CLEANER**

(30) Priority: 20.03.2023 KR 20230036161; 11.05.2023 KR 20230061264
(71) Applicant: Samsung Electronics Co., Ltd., Suwon-si, Gyeonggi-do 16677 (KR)
(72) Inventor: KANG, Hun, Suwon-si, Gyeonggi-do 16677 (KR); KWON, Kihwan, Suwon-si, Gyeonggi-do 16677 (KR); LEE, Hansaem, Suwon-si, Gyeonggi-do 16677 (KR); KIM, Dongjun, Suwon-si, Gyeonggi-do 16677 (KR); KIM, Hyeoncheol, Suwon-si, Gyeonggi-do 16677 (KR); CHOI, Jiwon, Suwon-si, Gyeonggi-do 16677 (KR)
(74) Representative: Walaski, Jan Filip
(86) International application number: PCT/KR2024/000769
(87) International publication number: WO 2024/195996

(57) **Abstract**

A cleaning device includes a suction device configured to suck a pollutant into the suction device; a body configured to collect the sucked pollutant, wherein the suction device includes: a drum rotatable around an axis and having a hollow portion, a driving motor disposed in the hollow portion of the drum and configured to apply a rotational force to the drum to rotate the drum around the axis, a rotatable chamber surrounding the driving motor and disposed between the drum and the driving motor, the rotatable chamber rotatable coaxially with the axis and configured to rotate with the drum so that a cooling fluid between the driving motor and the rotatable chamber spirals around the driving motor when the drum is rotated, and a cooling fluid discharge hole at an end of the rotatable chamber to discharge the cooling fluid outside of the rotatable chamber.

## Description

### Technical Field

The disclosure relates to a cleaning device configured to automatically perform a cleaning operation, and more particularly, to a cleaning device providing a rotatable drum which is rotatable around an axis.

### Background Art

Recently, a cleaning device is able to provide various conveniences, such as a user not needing to directly perform cleaning, a possibility of arbitrarily setting an operation mode, an operation time, etc. and the like. Thus, the demand for an automatic cleaning device has increased in recent times. An automatic cleaning device may be driven indoors according to a predetermined method and may suck in dust, small trash, etc. existing on a floor. To this end, the automatic cleaning device may include a motor for forming a suction force, a dustbin storing sucked in dust or small trash, a filter configured to purify and discharge air sucked into the dustbin, etc.

Trash collected by the automatic cleaning device may include various forms. For example, not only contaminants of various sizes, but also hair strands detached from a human body, fiber strands separated from clothes, etc. may be included in the trash. Trash such as the hair strands, the fiber strands, the fur of companion animals, etc. may be easily stuck to an object having a rough surface, due to electrostatic attraction. Also, the trash may not be easily detached from the surface of the object to which the trash is stuck. In order to detach from a surface a material that is stuck to the surface and is not easily separated therefrom, a rotatable drum in contact with a surface to be cleaned may rotate at a high speed. In the case of the rotatable drum rotating at a high speed, excessive heat may be generated, and thus, a malfunction of a cleaning device may occur.

### Disclosure

### Technical Solution

A cleaning device according to an embodiment of the disclosure may include a suction device configured to suck in a pollutant from a surface to be cleaned; and a main body configured to collect the pollutant sucked in through the suction device.

The suction device includes a rotatable drum rotatable around an axis and having a hollow portion, a driving motor disposed in the hollow portion of the rotatable drum and configured to apply a rotational force to the rotatable drum to rotate the rotatable drum around the axis, a rotatable chamber surrounding the driving motor and disposed between the rotatable drum and the driving motor, the rotatable chamber rotatable coaxially with the axis, and a cooling fluid discharge hole at a first end of the rotatable chamber to discharge the cooling fluid to an outside of the rotatable chamber.

### Description of Drawings

FIG. 1 is a perspective view of a cleaning device according to an embodiment of the disclosure.
FIG. 2 is a perspective view of a suction device according to an embodiment of the disclosure.
FIG. 3 is an exploded perspective view of a suction device according to an embodiment of the disclosure.
FIG. 4 is an exploded perspective view of a rotatable drum, a motor portion, and a rotatable chamber according to an embodiment of the disclosure.
FIG. 5 is a cross-sectional view of a suction device taken along a line A-A illustrated in FIG. 2.
FIG. 6 is a perspective view of a rotatable chamber according to an embodiment of the disclosure.
FIG. 7 is an exploded perspective view of a rotatable chamber and a motor portion according to an embodiment of the disclosure.
FIG. 8 is a front view of a rotatable chamber according to an embodiment of the disclosure.
FIG. 9 is a cross-sectional view of a rotatable chamber according to an embodiment of the disclosure.
FIG. 10 is a cross-sectional view of a suction device according to an embodiment of the disclosure.
FIG. 11 is a partial side view of a suction device according to an embodiment of the disclosure.
FIG. 12 is a cross-sectional view of a rotatable drum in which a cooling fluid circulates while a rotatable chamber does not rotate.
FIG. 13 is a cross-sectional view of a rotatable drum in which a cooling fluid circulates while a rotatable chamber rotates, according to an embodiment of the disclosure.
FIG. 14 is a partial cutaway view of a rotatable drum according to an embodiment of the disclosure.
FIG. 15 is a perspective view of a rotatable chamber and a motor portion, according to an embodiment of the disclosure.
FIG. 16 is an exploded perspective view of a printed circuit board (PCB) module and a rotatable chamber, according to an embodiment of the disclosure.
FIG. 17 is a cross-sectional view of a rotatable drum in which a cooling fluid circulates while a rotatable chamber rotates, according to an embodiment of the disclosure.

### Mode for Invention

Hereinafter, the structures and operations of the disclosure will be described in detail through the embodiments of the disclosure illustrated in the accompanying drawings.

The terms used in this specification will be briefly described and then the disclosure will be described in detail.

The terms used in the disclosure are general terms as possible that have been widely used nowadays in consideration of the functions in the disclosure, which, however, may be changed according to an intention of a technician in the art, a precedent, the advent of new technologies, or the like. Also, in particular cases, there may be terms arbitrarily selected by an applicant, and in this case, the meanings of the terms will be described in detail in the corresponding parts of the description of the disclosure. Therefore, the terms used in the disclosure should be defined based on the meanings of the terms and the content throughout the disclosure, rather than simply based on the titles of the terms.

Throughout the specification, when a part "includes" or "comprises" an element, the part may further include other elements, rather than excluding the other elements, unless there is a particular description contrary thereto.

Also, the terms "first," "second," etc. are not used herein to limit the meanings, but are used to distinguish one element from another element.

Hereinafter, an embodiment of the disclosure will be described in detail with reference to the accompanying drawings, so that the embodiment of the disclosure may be easily implemented by one of ordinary skill in the art. However, the disclosure may have different forms and should not be construed as being limited to the embodiment of the disclosure described herein. Also, in the drawings, parts not related to descriptions are omitted for the clear description of the disclosure, and throughout the specification, like reference numerals are used for like elements.

The terms used in the description below "a top side," "a bottom side," "front and rear directions," etc. are defined based on the drawings, and the shape and the position of each of components are not limited by these terms.

Hereinafter, an embodiment of the disclosure is described in detail with reference to the accompanying drawings.

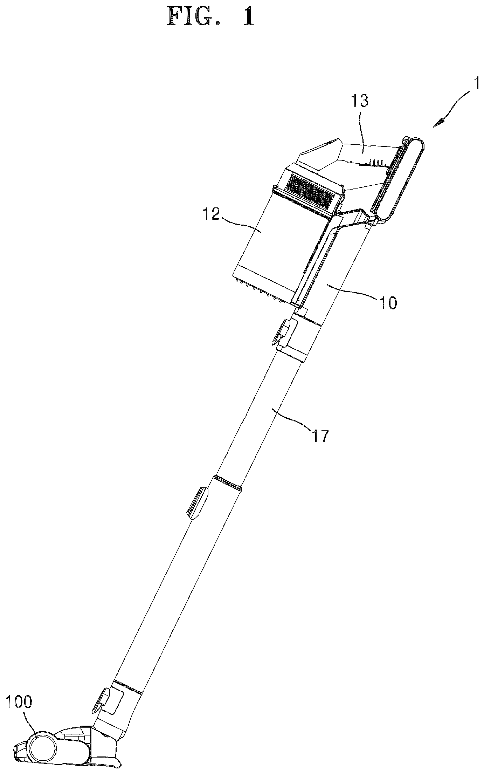

FIG. 1 is a perspective view of a cleaning device according to an embodiment of the disclosure.

Referring to FIG. 1, a cleaning device 1 according to an embodiment of the disclosure may include a main body 10 providing, inside thereof, a suction motor (not shown) for generating a suction force, a suction device 100 configured to suck in a pollutant of a surface to be cleaned, and a transportation portion 17 arranged between the main body 10 and the suction device 100 and configured to transport the pollutant sucked in from the suction device 100 to the main body 10.

However, although not shown, the suction device 100 may be directly connected to the main body 10 without the transportation portion 17. The main body 10 may include a dust collection can 12 collecting the pollutant sucked in through the suction device 100. Accordingly, the pollutant introduced through the suction device 100 may be stored in the dust collection can 12 through the transportation portion 17.

A handle 13 for a user to grip may be provided outside the main body 10. The user may perform cleaning while gripping the handle 13. A battery (not shown) may be provided in the main body 10, and the battery may be connected to the suction device 100 and may supply power to the suction device 100.

Hereinafter, the suction device 100 is described in detail.

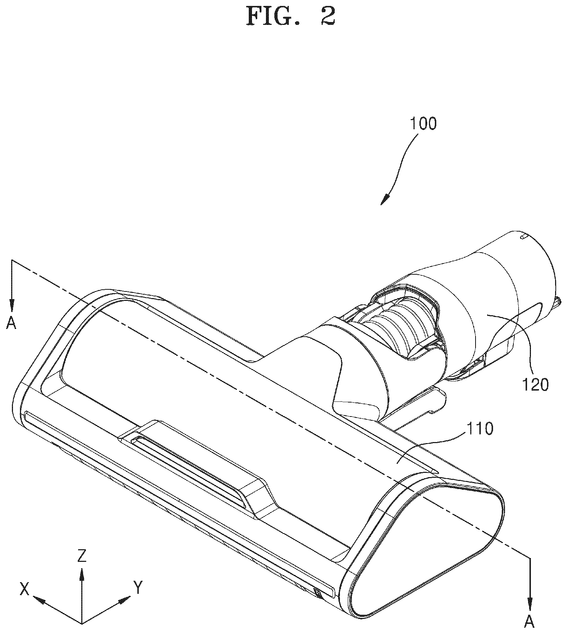

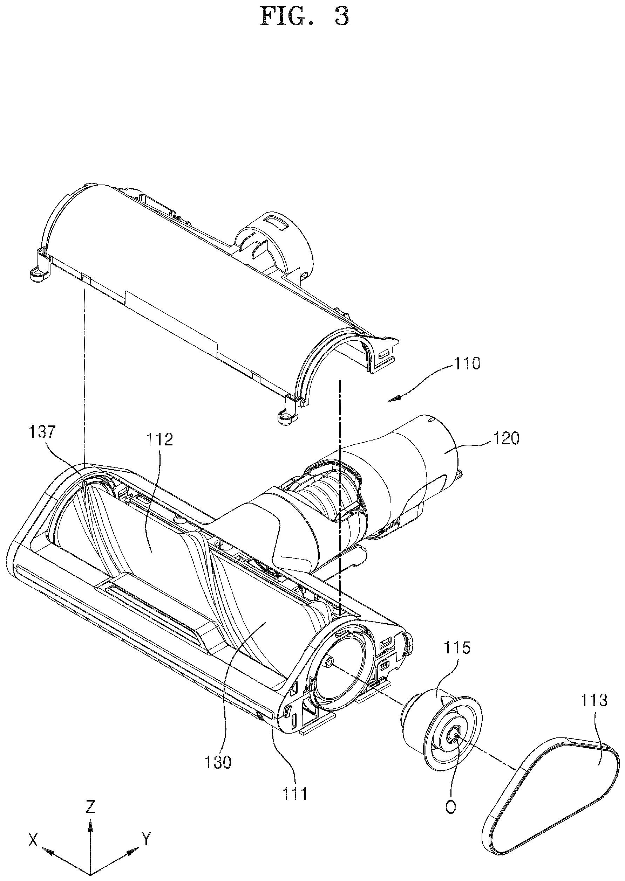

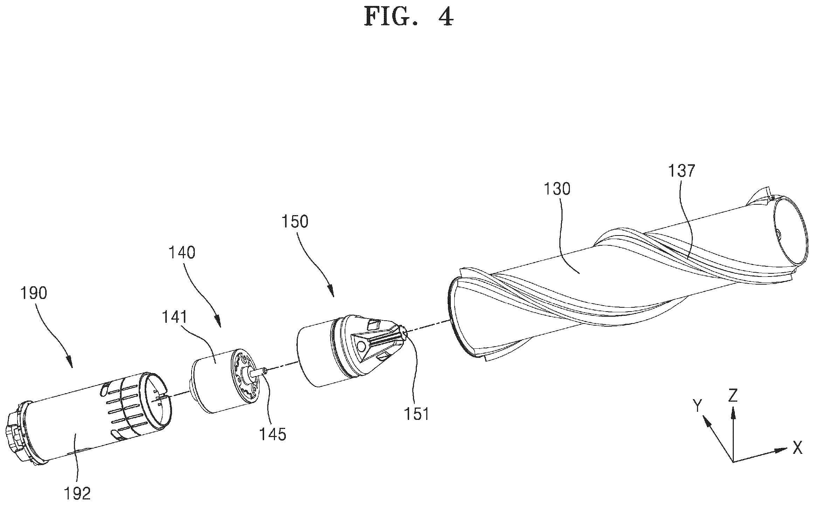

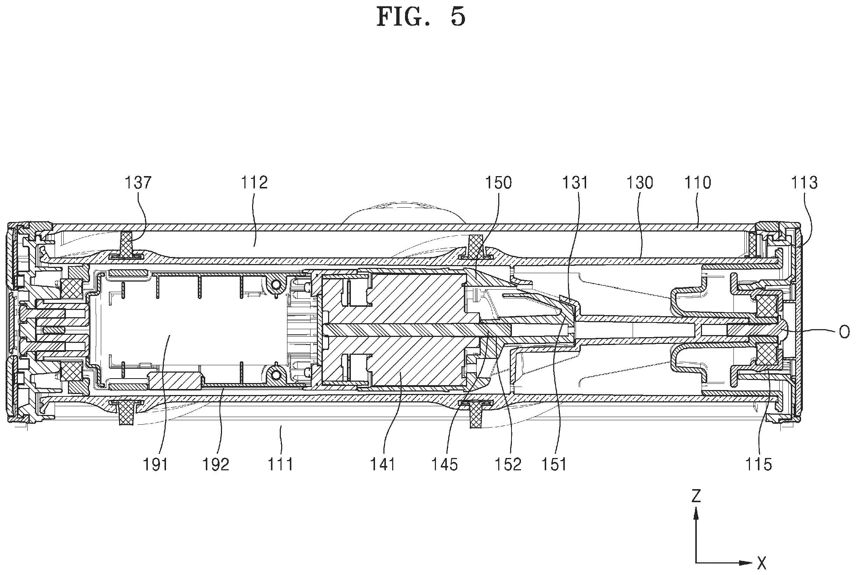

FIG. 2 is a perspective view of a suction device according to an embodiment of the disclosure. FIG. 3 is an exploded perspective view of a suction device according to an embodiment of the disclosure. FIG. 4 is an exploded perspective view of a rotatable drum, a motor portion, and a rotatable chamber according to an embodiment of the disclosure. FIG. 5 is a cross-sectional view of a suction device taken along a line A-A illustrated in FIG. 2.

Referring to FIGS. 2 to 5, the suction device 100 according to an embodiment of the disclosure may include a housing 110, a connection portion 120, a rotatable drum 130, a motor portion 140, a rotatable chamber 150, and a printed circuit board (PCB) module 190.

The housing 110 according to an embodiment of the disclosure may include an opening 111 for sucking in air including a pollutant and a chamber 112 having a predetermined accommodation space. For example, the opening 111 may have a shape in which a surface of the opening 111, the surface being arranged to face a surface to be cleaned, is open. For example, the opening 111 may be arranged at a bottom surface of the housing 110, the bottom surface facing the surface to be cleaned. However, the disclosure is not limited thereto, and the opening 111 may extend to a front portion of the housing 110 to sufficiently obtain a suction area. Accordingly, not only a bottom surface of the surface to be cleaned, but also a portion thereof adjacent to a wall surface may be cleaned. Via a suction force generated by the main body 10, the pollutant may be collected through the opening 111. The collected pollutant may be moved to the connection portion 120 by passing through the chamber 112.

The chamber 112 may be an accommodation space configured to accommodate the rotatable drum 130 to be described below. For example, the chamber 112 may include a shape corresponding to a shape of the rotatable drum 130. For example, when the rotatable drum 130 extends in one direction (an X direction), the chamber 112 may also extend in the one direction (the X direction). Also, the chamber 112 according to an embodiment of the disclosure may block at least a portion of an upper portion of the rotatable drum 130. Also, an inner circumferential surface of the chamber 112 may have a curved shape to correspond to a shape of an outer circumferential surface of the rotatable drum 130. Accordingly, the chamber 112 may prevent the ascending of the pollutant collected from the surface to be cleaned with the rotatable drum 130 rotating.

The rotatable drum 130 may be arranged at the housing 110 to be rotatable around an axis O. For example, the rotatable drum 130 may be accommodated in the chamber 112 provided in the housing 110. For example, at least a portion of the rotatable drum 130 may be exposed to the outside through the opening 111. The rotatable drum 130 may collect the pollutant by rubbing the surface to be cleaned by rotating via a driving force transmitted through a driving motor 141 to be described below.

Also, on an outer circumferential surface of the rotatable drum 130 according to an embodiment of the disclosure, a brush 137 may be arranged to extend in a predetermined length from the outer circumferential surface of the rotatable drum 130. For example, the brush 137 may include a fabric, such as a cotton flannel, or a felt material. Accordingly, when the rotatable drum 130 rotates around the axis O, the pollutant, such as dusts, etc., accumulated on the surface to be cleaned, may be effectively picked up by the brush 137 arranged on the outer circumferential surface of the rotatable drum 130.

According to an embodiment of the disclosure, the housing 110 may include side surface covers 113 arranged at both side surfaces of the chamber 112. For example, a rotation support 115 which may support the rotatable drum 130 to be rotatable may be arranged at the side surface cover 113. For example, the rotation support 115 may have a pipe shape extending in one direction (the X direction). Here, the rotation support 115 may be arranged to be inserted into an end of the rotatable drum 130.

The rotatable drum 130 according to an embodiment of the disclosure may rotate in a counterclockwise direction, based on the perspective view of FIG. 2. Here, the rotatable drum 130 may rotate to push away the pollutant in a direction from a contact point between the rotatable drum 130 and the surface to be cleaned toward the connection portion 120. Thus, the pollutant got rid of from the surface to be cleaned by the rotatable drum 130 may be moved toward the connection portion 120 and may be sucked into the connection portion 120 via a suction force.

The motor portion 140 may be arranged to be inserted into a hollow portion of the rotatable drum 130. The motor portion 140 according to an embodiment of the disclosure may include the driving motor 141 configured to generate a driving force to rotate the rotatable drum around the axis and a driving force transmission shaft 145. For example, the driving motor 141 may include a brushless direct current (DC) (BLDC) motor, but the disclosure is not limited thereto. A PCB (not shown) configured to control the driving motor 141 may be arranged at one side of the driving motor 141.

For example, the driving force transmission shaft 145 may extend in an axis direction (the X direction). Here, the driving force transmission shaft 145 may rotate around an axis by receiving the driving force from the driving motor 141. An end of the driving force transmission shaft 145 according to an embodiment of the disclosure may be connected to the driving motor 141, and the other end of the driving force transmission shaft 145 may be connected to the rotatable drum 130 with the rotatable chamber 150 therebetween. For example, the other end of the driving force transmission shaft 145 may be connected to an axis coupling hole 152 provided in the rotatable chamber 150 to be described below, according to an axis coupling method.

The axis coupling between the driving force transmission shaft 145 and the axis coupling hole 152 according to an embodiment of the disclosure may be realized according to an arbitrary method from among a bolt insertion method, a key insertion method, a spline arrangement method, and a D-groove formation method. However, the disclosure is not limited thereto. The driving force transmission shaft 145 and the axis coupling hole 152 may be fastened to each other according to an arbitrary method by which a driving force may be transmitted from the driving force transmission shaft 145 to the rotatable chamber 150.

When the driving force transmission shaft 145 and the rotatable chamber 150 are fastened to each other according to the axis coupling method by which the driving force may be transmitted, a rotational force generated by the driving motor 141 may be transmitted to the rotatable chamber 150 by the driving force transmission shaft 145. A rotating axis 151 may be arranged at an end of the rotatable chamber 150. Here, the rotating axis 151 may be inserted into the rotatable drum 130 and may be connected to an axis coupling portion 131 arranged at an end of the rotatable drum 130 according to an axis coupling method.

The axis coupling between the rotating axis 151 and the axis coupling portion 131 according to an embodiment of the disclosure may be realized according to an arbitrary method from among a bolt insertion method, a key insertion method, a spline arrangement method, and a D-groove formation method. However, the disclosure is not limited thereto. The rotating axis 151 and the axis coupling portion 131 may be fastened to each other according to an arbitrary method by which a driving force may be transmitted from the rotatable chamber 150 to the rotatable drum 130.

When the rotatable chamber 150 and the rotatable drum 130 are fastened to each other according to the axis coupling method by which the driving force may be transmitted, the rotational force transmitted to the rotatable chamber 150 may be transmitted to the rotatable drum 130. The rotatable drum 130 receiving the rotational force may rotate around the axis O.

The pollutants which may be collected by the rotatable drum 130 when the rotatable drum 130 rotates around the axis O may have various forms. For example, the pollutants stuck to the surface to be cleaned may include hair strands detached from human bodies, fiber strands separated from clothes, etc., as well as contaminants of various sizes. Trashes such as the hair strands, the fiber strands, the fur of companion animals, etc. may be easily stuck to an object having a rough surface due to electrostatic gravity. Also, the trashes described above may not be easily separated from the surface to which the trashes are stuck. In order to detach a material from a surface, the material being stuck to the surface and not being easily separated therefrom, the rotatable drum 130 in contact with a surface to be cleaned may rotate at a high speed. For example, the rotatable drum 130 may rotate around an axis at a speed of from 1500 rpm or higher to a speed of 4500 rpm or lower. When the rotatable drum 130 rotates at a high speed, excessive heat may be generated in the driving motor 141 configured to generate a driving force to drive the rotatable drum 130. Thus, heat dissipation for preventing overheating of the driving motor 141 may be required.

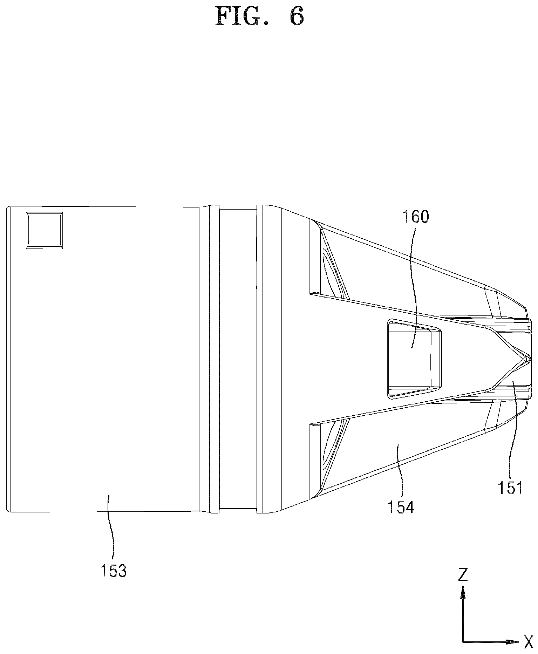

The rotatable chamber 150 may be arranged to surround the driving motor 141 and may be arranged to be rotatable coaxially with the axis O, around which the rotatable drum 130 rotates. The rotatable chamber 150 according to an embodiment of the disclosure may have a pipe shape having an open end. Here, the driving motor 141 may be arranged to be inserted into the rotatable chamber 150. Aspects with respect to the coupling of the rotatable chamber 150 and the driving motor 141 will be described in more detail below with reference to FIGS. 6 to 9.

The PCB module 190 may include a PCB 191 and a PCB support 192 configured to support the PCB 191. The PCB module 190 according to an embodiment of the disclosure may be arranged to be inserted into the rotatable drum 130. For example, as illustrated in FIG. 4, the PCB module 190, the motor portion 140, and the rotatable chamber 150 may be arranged to be sequentially inserted into the hollow portion of the rotatable drum 130 in the axis direction (the X direction).

For example, the PCB support 192 may be provided to have a pipe shape extending in the axis direction (the X direction). Here, the PCB 191 may be arranged to be inserted into the PCB support 192. The PCB support 192 into which the PCB 191 is inserted according to an embodiment of the disclosure may be arranged to be fixed to the housing 110.

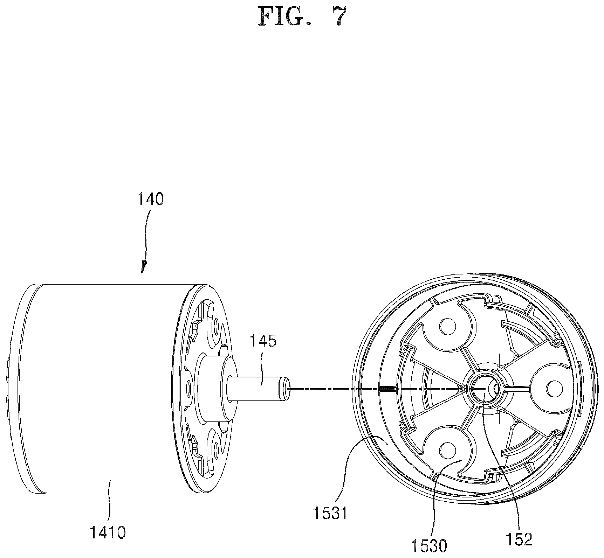

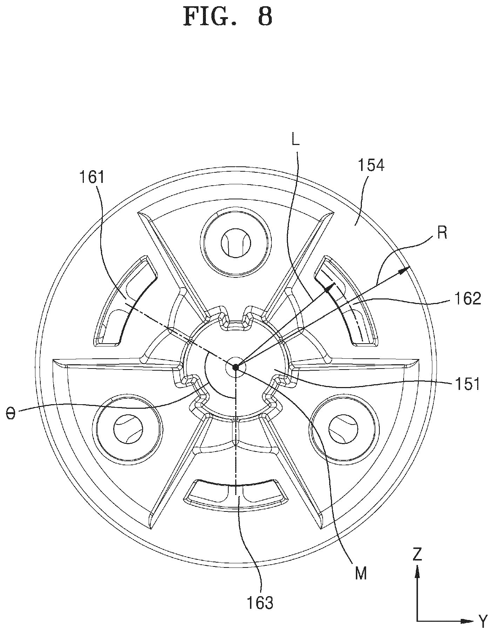

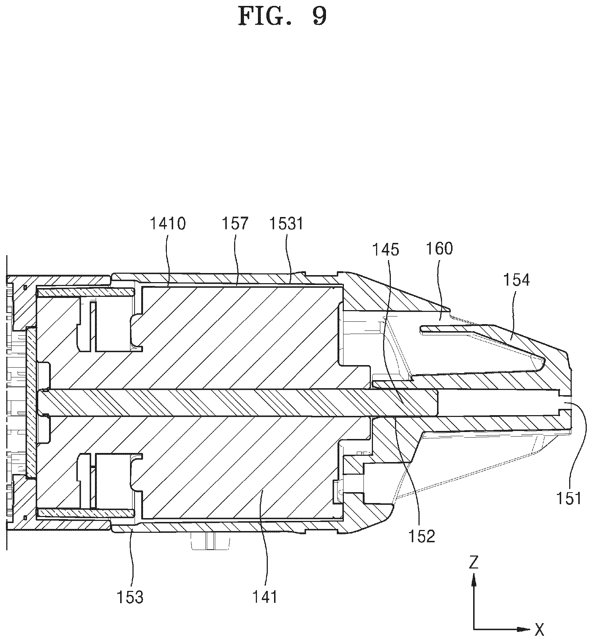

FIG. 6 is a perspective view of a rotatable chamber according to an embodiment of the disclosure. FIG. 7 is an exploded perspective view of a rotatable chamber and a motor portion according to an embodiment of the disclosure. FIG. 8 is a front view of a rotatable chamber according to an embodiment of the disclosure. FIG. 9 is a cross-sectional view of a rotatable chamber according to an embodiment of the disclosure.

Referring to FIGS. 6 to 9, the rotatable chamber 150 according to an embodiment of the disclosure may include a base portion 153 having a pipe shape having a hollow extending in an axis direction (an X direction) and a rear end 154 blocking an end of the base portion 153. Here, the rotating axis 151 may be arranged at an end of the rear end 154. Also, the axis coupling hole 152 may be arranged at the end of the rear end 154. The rotating axis 151 and the axis coupling hole 152 may be arranged at an outer surface and an inner surface of the rear end 154.

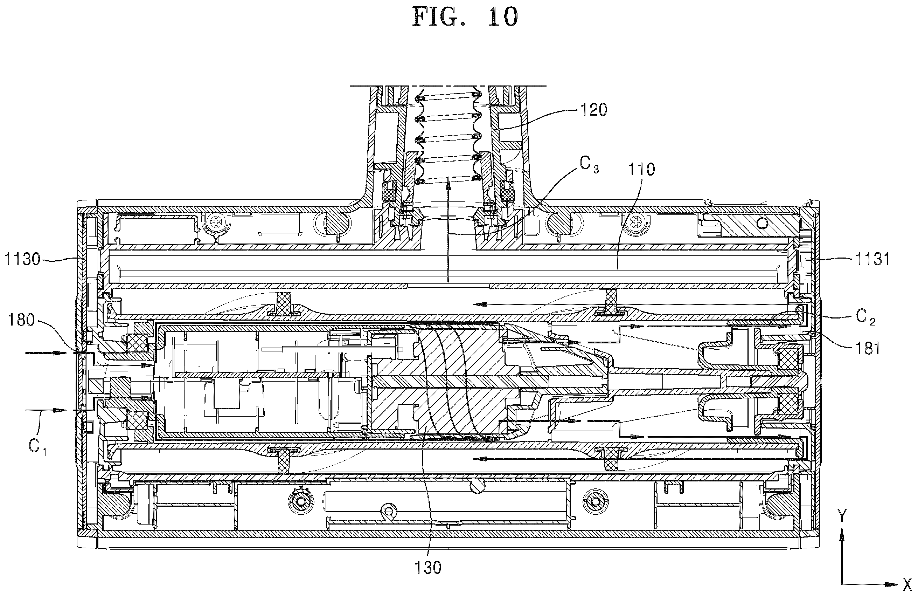

The base portion 153 provided in the rotatable chamber 150 may have a pipe shape such that the other end of the base portion 153 includes an opening 1530. For example, the opening 1530 may be connected to the PCB support 192 for fluid communication with the PCB support 192 as illustrated in FIGS. 4 and 5. Accordingly, a cooling fluid C (see FIG. 10) to be described below may pass through the PCB support 192 to be introduced into the rotatable chamber 150.

According to an embodiment of the disclosure, a cross-sectional surface of the rotatable chamber 150, taken along a plane (a YZ plane) perpendicular to the axis direction (the X direction), may have a circular shape. For example, the base portion 153 may have a shape of a circular pipe having a circular-shaped cross-sectional surface along the plane (the YZ plane) perpendicular to the axis direction (the X direction). However, the disclosure is not limited thereto, and the cross-sectional surface of the rotatable chamber 150, taken along the plane (the YZ plane) perpendicular to the axis direction (the X direction), may have a polygonal shape. Here, the base portion 153 may have a shape of an angular pipe having a polygonal-shaped cross-sectional surface along the plane (the YZ plane) perpendicular to the axis direction (the X direction).

The driving motor 141 according to an embodiment of the disclosure may be arranged to be inserted into the rotatable chamber 150. For example, the driving motor 141 may be arranged to be inserted into the hollow provided in the base portion 153. As described above, an end of the driving force transmission shaft 145 according to an embodiment of the disclosure may be connected to the driving motor 141, and the other end of the driving force transmission shaft 145 may be connected to the axis coupling hole 152 provided in the rotatable chamber 150 according to the axis coupling method. When the driving force transmission shaft 145 and the rotatable chamber 150 are fastened to each other according to the axis coupling method by which the driving force may be transmitted, a rotational force generated by the driving motor 141 may be transmitted to the rotatable chamber 150 by the driving force transmission shaft 145.

The rotatable chamber 150 may be arranged to be spaced apart from the driving motor 141 with a heat dissipation portion 157 therebetween, wherein the cooling fluid C may be moved through the heat dissipation portion 157. According to an embodiment of the disclosure, the base portion 153 provided in the rotatable chamber 150 may be arranged to be spaced apart from the driving motor 141 with the heat dissipation portion 157 therebetween in other directions (a Y direction and a Z direction) perpendicular to the axis direction (the X direction).

The heat dissipation portion 157 according to an embodiment of the disclosure may be provided in a gap space between an inner surface 1531 of the base portion 153 and an outer surface 1410 of the driving motor 141. For example, when the driving motor 141 is arranged to be inserted into the rotatable chamber 150, a predetermined space gap may be provided between the inner surface 1531 of the base portion 153 and the outer surface 1410 of the driving motor 141. Here, the heat dissipation portion 157 may extend in the axis direction (the X direction) between both ends of the rotatable chamber 150.

According to an embodiment of the disclosure, when the rotatable drum 130 rotates at a high speed, the driving motor 141 configured to generate a driving force to drive the rotatable drum 130 may be overly heated. To prevent the overheating of the driving motor 141, the cooling fluid C may be moved through the heat dissipation portion 157. For example, the cooling fluid C may include air, but the disclosure is not limited thereto. The cooling fluid C may include an arbitrary fluid which may move through the heat dissipation portion 157.

A cooling fluid discharge hole 160 may be arranged at an end of the rotatable chamber 150 and may discharge the cooling fluid C moved through the heat dissipation portion 157 to the outside of the rotatable chamber 150. The cooling fluid discharge hole 160 according to an embodiment of the disclosure may be arranged at an end of the rotatable chamber 150, for example, at the rear end 154, which is arranged at an end of the base portion 153.

The cooling fluid discharge hole 160 may be provided as a plurality. Here, the plurality of cooling fluid discharge holes 160 may be arranged to be apart from each other with a predetermined distance therebetween. For example, as illustrated in FIG. 8, the cooling fluid discharge holes 160 may include first to third cooling fluid discharge holes 161 to 163. Here, the first to third cooling fluid discharge holes 161 to 163 may be arranged to be apart from each other with a predetermined distance therebetween. According to the embodiment of the disclosure, the cooling fluid discharge holes 160 may include three cooling fluid discharge holes. However, the disclosure is not limited thereto.

For example, when a cross-sectional surface of the rotatable chamber 150 along a plane (a Y Z plane) perpendicular to the axis direction (the X direction) has a circular shape, the plurality of cooling fluid discharge holes 160 may be arranged to be apart from each other with a predetermined distance therebetween in a circumferential direction of the circular shape. Also, each of the plurality of cooling fluid discharge holes 160 may have a circular shaped-cross-sectional surface having a predetermined diameter. For example, the entire area of the plurality of cooling fluid discharge holes 160 may be 15 mm² to 60 mm². For example, when the plurality of cooling fluid discharge holes 160 include three cooling fluid discharge holes, each of the plurality of cooling fluid discharge holes 160 may have an area of from 5 mm² or greater to 20 mm² or less. However, the disclosure is not limited thereto. The cooling fluid discharge hole 160 may have different shapes and areas according to the flow amount of the cooling fluid C.

Also, here, the plurality of cooling fluid discharge holes 160 may be arranged to be apart from each other by a predetermined angle θ, for example, an angle of from 10 degrees or greater to 180 degrees of less in the circumferential direction of the circular shape. For example, the first to third cooling fluid discharge holes 161 to 163 may be arranged to be apart from each other with a predetermined distance therebetween in the circumferential direction with respect to a central portion of the rotatable chamber 150, for example, the rotating axis 151. Here, the first to third cooling fluid discharge holes 161 to 163 may be arranged to be apart from each other by a predetermined angle θ, for example, an angle of 120 degrees.

Also, for example, when a cross-sectional surface of the rotatable chamber 150 has a circular shape along the plane (the YZ plane) perpendicular to the axis direction (the X direction), the cooling fluid discharge hole 160 may be arranged to be apart from a central portion of the circular shape, for example, a central portion M of the rotatable chamber 150 by a first distance L in a radial direction of the circular shape. Here, the first distance L from the central portion M of the rotatable chamber 150 to the cooling fluid discharge hole 160 may be defined as a distance from the central portion M of the rotatable chamber 150 to a central line of the cooling fluid discharge hole 160 in the radial direction. For example, when the cross-sectional surface of the rotatable chamber 150 along the plane (the YZ plane) perpendicular to the axis direction (the X direction) has the circular shape, the circular shape may have a predetermined radius R from the central portion M of the rotatable chamber 150. Here, the first distance L may be from 5 mm or greater to 25 mm or less from the central portion M of the rotatable chamber 150.

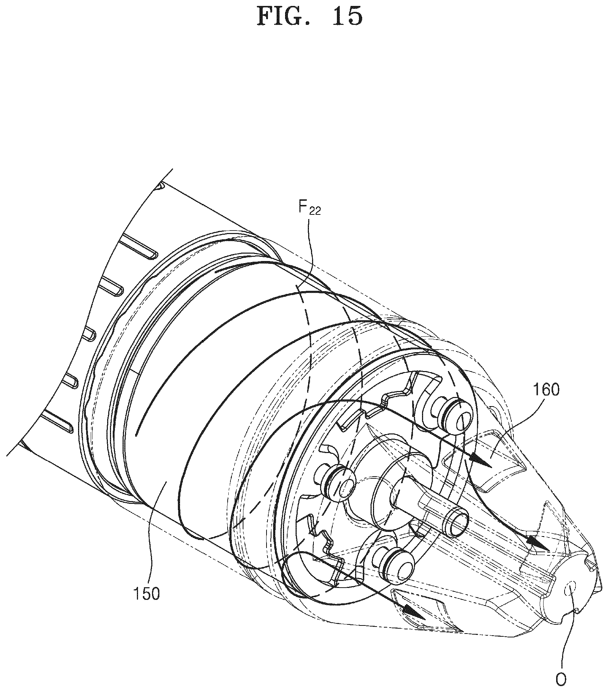

According to an embodiment of the disclosure, when the cooling fluid discharge hole 160 is arranged to be apart from the central portion of the circular shape, for example, the central portion M of the rotatable chamber 150, by the first distance L, the cooling fluid C passing through the heat dissipation portion 157 may be discharged through the cooling fluid discharge hole 160 at a relatively increased speed. For example, when the rotatable chamber 150 rotates around an axis, a centrifugal force may be applied to the cooling fluid C passing through the heat dissipation portion 157 provided in the rotatable chamber 150. Here, a 2^{nd}-2 fluid passage F₂₂ (see FIG. 15) of the cooling fluid C may be formed in a direction away from the central portion M of the rotatable chamber 150.

According to an embodiment of the disclosure, when the cooling fluid discharge hole 160 is arranged to be apart from the central portion of the circular shape, for example, the central portion M of the rotatable chamber 150, by the first distance L, the cooling fluid C moving in the direction away from the central portion M of the rotatable chamber 150 may be directly discharged to the outside of the rotatable chamber 150 without having to move again to the center of the rotatable chamber 150. Accordingly, a discharging speed of the cooling fluid C passing through the cooling fluid discharge hole 160 apart from the central portion M of the rotatable chamber 150 by the first distance L may be relatively less decreased than a discharging speed of the cooling fluid C passing through the cooling fluid discharge hole 160 adjacent to the central portion M of the rotatable chamber 150.

According to an embodiment of the disclosure, when the discharging speed of the cooling fluid C passing through the cooling fluid discharge hole 160 increases, the cooling capacity of the cooling fluid C may increase. Thus, the efficiency of dissipating the heat generated from the driving motor 141 may be increased. Hereinafter, the cooling fluid C moving along a fluid passage F formed in the rotatable drum 130 is described in more detail.

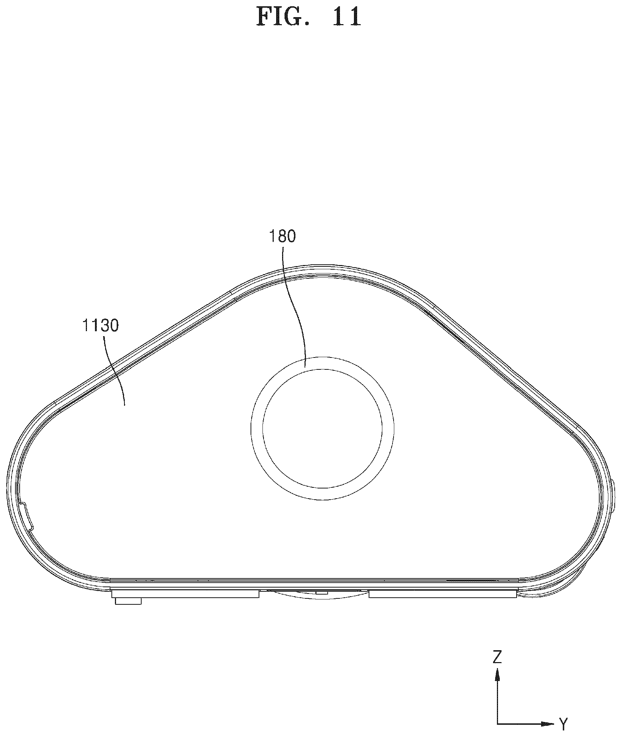

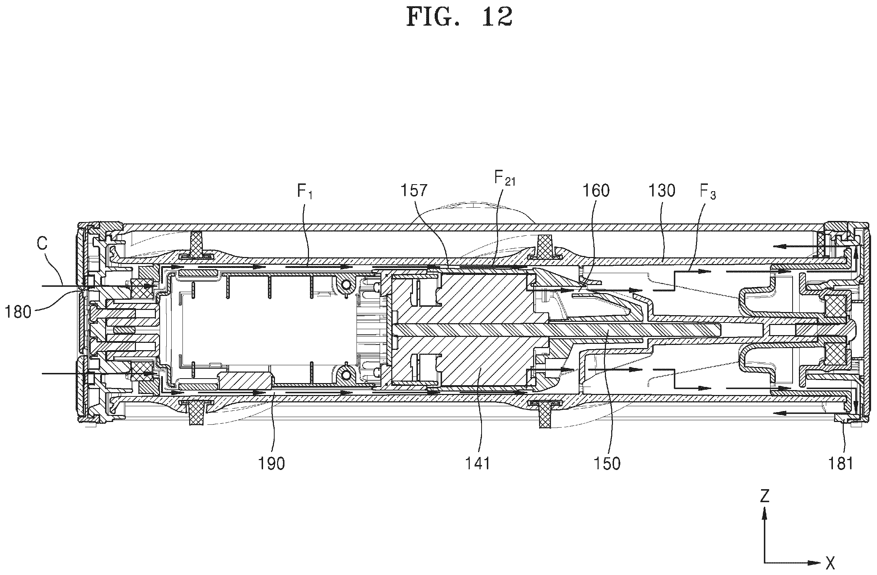

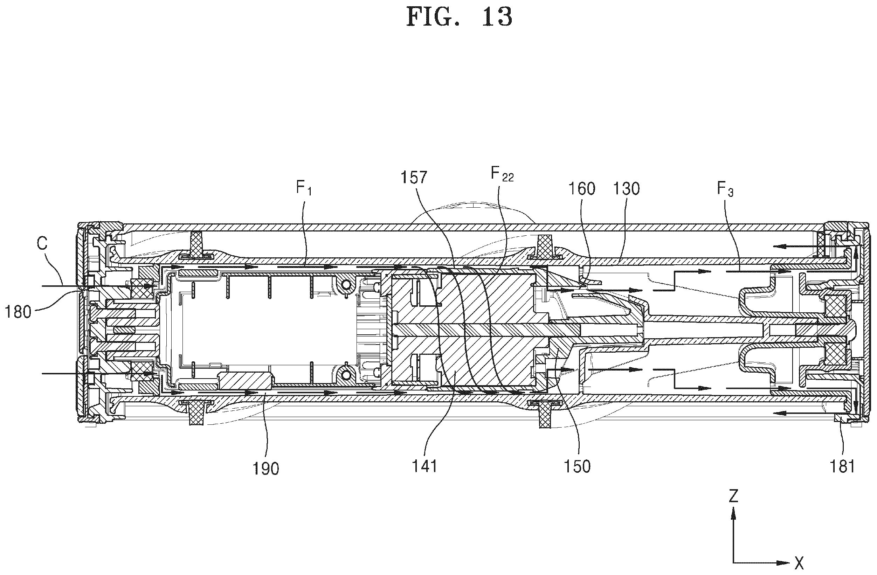

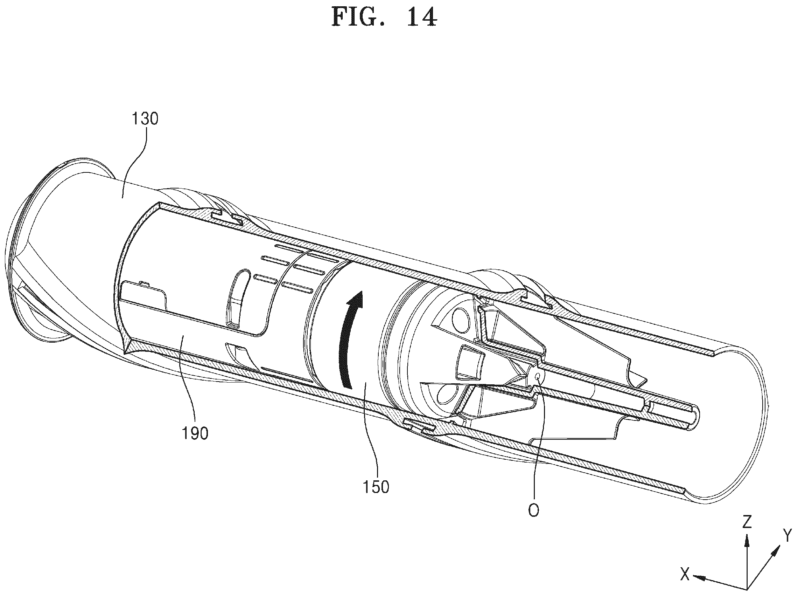

FIG. 10 is a cross-sectional view of a suction device according to an embodiment of the disclosure. FIG. 11 is a partial side view of a suction device according to an embodiment of the disclosure. FIG. 12 is a cross-sectional view of a rotatable drum in which a cooling fluid circulates while a rotatable chamber does not rotate. FIG. 13 is a cross-sectional view of a rotatable drum in which a cooling fluid circulates while a rotatable chamber rotates, according to an embodiment of the disclosure. FIG. 14 is a partial cutaway view of a rotatable drum according to an embodiment of the disclosure. FIG. 15 is a perspective view of a rotatable chamber and a motor portion, according to an embodiment of the disclosure.

Referring to FIGS. 10 and 11, the cooling fluid C according to an embodiment of the disclosure may be introduced from the outside of the suction device 100 and may be discharged from the suction device 100 through the connection portion 120. For example, a cooling fluid inlet portion 180 may be provided to have a via-hole shape enabling fluid communication with the outside. The cooling fluid inlet portion 180 may be arranged at an end of the rotatable drum 130. For example, the cooling fluid inlet portion 180 may be arranged at a first side cover 1130 arranged at an end of the rotatable drum 130.

According to an embodiment of the disclosure, the cooling fluid C introduced through the cooling fluid inlet portion 180 may move along the hollow portion of the rotatable drum 130 and may be discharged to the outside of the rotatable drum 130 through a cooling fluid outlet portion 181 arranged at the other end of the rotatable drum 130. Here, the cooling fluid outlet portion 181 may be connected to an inner portion of the housing 110 for fluid communication with the inner portion of the housing 110. Compared to an outer portion of the suction device 100, negative pressure may be formed at the inner portion of the housing 110 by a suction force applied through the connection portion 120. Thus, the cooling fluid C may form a fluid passage extending from the cooling fluid inlet portion 180 to the cooling fluid outlet portion 181, by using the differential pressure between the outer portion of the suction device 100, for example, a peripheral portion, and the inner portion of the housing 110, the differential pressure being caused by the suction force applied through the connection portion 120.

For example, a first cooling fluid C₁ disposed outside the suction device 100 may be introduced to the hollow portion of the rotatable drum 130 through the cooling fluid inlet portion 180. Here, the first cooling fluid C₁ may be introduced to the hollow portion of the rotatable drum 130 due to the differential pressure between the outer portion of the suction device 100 and the inner portion of the housing 110 as described above.

The first cooling fluid C₁ introduced to the hollow portion of the rotatable drum 130 through the cooling fluid inlet portion 180 may move through the hollow portion of the rotatable drum 130 in an axis direction (an X direction). A second cooling fluid C₂ moving through the hollow portion of the rotatable drum 130 may receive the heat generated from the driving motor 141 arranged at the hollow portion of the rotatable drum 130.

The second cooling fluid C₂ receiving the heat generated from the driving motor 141 may be discharged to the outside of the rotatable drum 130 through the cooling fluid outlet portion 181. A third cooling fluid C₃ discharged to the outside of the rotatable drum 130 may pass through the inner portion of the housing 110 and may be sucked in through the connection portion 120.

As described above, the cooling fluid inlet portion 180 may be arranged at an end of the rotatable drum 130, and the cooling fluid outlet portion 181 may be arranged at the other end of the rotatable drum 130, and thus, a fluid passage may be formed to extend in the axis direction (the X direction) in which the rotatable drum 130 extends. Herein the fluid passage extending from the cooling fluid inlet portion 180 to the cooling fluid outlet portion 181 is described in more detail.

Referring to FIGS. 12, 14, and 15, according to an embodiment of the disclosure, the cooling fluid C introduced to an end of the rotatable drum 130 through the cooling fluid inlet portion 180 may move in an axis direction (an X direction) along a first fluid passage F₁ passing through the PCB module 190 arranged in the rotatable drum 130.

The cooling fluid C passing through the PCB module 190 may be introduced to the rotatable chamber 150 through the opening 1530 illustrated in FIG. 7. The cooling fluid C introduced to the rotatable chamber 150 may move in the axis direction (the X direction) along a 2^{nd}-1 fluid passage F₂₁. Here, the 2^{nd}-1 fluid passage F₂₁ may be arranged at the heat dissipation portion 157 provided between the inner surface 1531 of the base portion 153 and the outer surface 1410 of the driving motor 141 as illustrated in FIG. 9. The cooling fluid C passing through the heat dissipation portion 157 may pass through the cooling fluid discharge hole 160 arranged at an end of the rotatable chamber 150 and may be discharged to the outside of the rotatable chamber 150.

The cooling fluid C passing through the rotatable chamber 150 may move in the axis direction (the X direction) along a third fluid passage F₃ and may be discharged to the outside through the cooling fluid outlet portion 181 arranged at the other end of the rotatable drum 130.

The driving motor 141 arranged to be inserted into the rotatable drum 130 as described above and the rotatable chamber 150 may be arranged at the 2^{nd}-1 fluid passage F₂₁ along which the cooling fluid C moves. Thus, the cooling fluid C moving along the 2^{nd}-1 fluid passage F₂₁ may discharge heat generated from the driving motor 141 to the outside.

According to an embodiment of the disclosure, in order to detach a material from a surface, the material being stuck to the surface and not being easily separated therefrom, the rotatable drum 130 in contact with a surface to be cleaned may rotate at a high speed. When the rotatable drum 130 rotates at a high speed, overheating may occur in the driving motor 141. Thus, an area of an inner portion of the rotatable drum 130 at which the 2^{nd}-1 fluid passage F₂₁ is formed, the area providing the driving motor 141, may require additional thermal dissipation capacity, compared to other areas not providing the driving motor 141. In order to improve the thermal dissipation capacity of the area providing the driving motor 141, cooling capacity of the cooling fluid C may have to be increased.

Referring to FIGS. 13 to 15, the rotatable chamber 150 according to an embodiment of the disclosure may rotate coaxially with the axis O. When the rotatable chamber 150 rotates around the axis O, a rotational force may be applied to the cooling fluid C moving through the heat dissipation portion 157. When the rotational force is applied to the cooling fluid C moving through the heat dissipation portion 157, the flow speed of the cooling fluid C may increase.

Also, according to an embodiment of the disclosure, when the rotational force is applied to the cooling fluid C moving through the heat dissipation portion 157, the 2^{nd}-2 fluid passage F₂₂ of the cooling fluid C moving through the heat dissipation portion 157 may be changed to be spiral. Here, a centrifugal force may be applied to the cooling fluid C moving through the heat dissipation portion 157. Thus, the 2^{nd}-2 fluid passage F₂₂ of the cooling fluid C moving through the heat dissipation portion 157 may be in a direction away from a central portion of the rotatable chamber 150.

According to an embodiment of the disclosure, the cooling fluid discharge hole 160 may be arranged to be apart from the central portion of the rotatable chamber 150 by the first distance L as illustrated in FIG. 7. When the cooling fluid discharge hole 160 is arranged to be apart from the central portion of the rotatable chamber 150 by a predetermined distance, the cooling fluid C moving in the direction away from the central portion of the rotatable chamber 150 may be directly discharged to the outside of the rotatable chamber 150 without having to move again to the central portion of the rotatable chamber 150. Accordingly, a discharging speed of the cooling fluid C passing through the cooling fluid discharge hole 160 apart from the central portion of the rotatable chamber 150 by the first distance L may be relatively higher than a discharging speed of the cooling fluid C passing through the cooling fluid discharge hole 160 adjacent to the central portion of the rotatable chamber 150.

According to an embodiment of the disclosure, when the flow speed of the cooling fluid C passing through the heat dissipation portion 157 increases, the cooling capacity of the cooling fluid C may increase. Thus, heat dissipation performance with respect to heat generated from the driving motor 141 arranged at the heat dissipation portion 157 may be increased.

### Experimental embodiment of the disclosure and comparative embodiment of the disclosure

A power value of the driving motor 141 according to the experimental embodiment of the disclosure is 330W. The rotatable drum 130 rotates at 3800 rpm, and the rotatable chamber 150 rotates at 3800 rpm. Three cooling fluid discharge holes 160 having an area of 15.4 mm² are arranged to be apart from each other by an angle of 120 degrees. A radius of the rotatable chamber 150 is 19.3 mm, and the cooling fluid discharge holes 160 are arranged to be apart from the center of the rotatable chamber 150 by 11. 4 mm.

According to the comparative embodiment of the disclosure, except that the rotatable chamber 150 does not rotate, the configurations are the same as the configurations of the experimental embodiment of the disclosure.

According to the experimental embodiment of the disclosure, a temperature of the driving motor 141 arranged at the heat dissipation portion 157 is 77.1 degrees Celsius. According to the comparative embodiment of the disclosure, the temperature of the driving motor 141 arranged at the heat dissipation portion 157 is 92.1 degrees Celsius.

As identified in the experimental embodiment of the disclosure and the comparative embodiment of the disclosure described above, a flow speed of the cooling fluid C moving along the 2^{nd}-2 fluid passage F₂₂ may be higher than a flow speed of the cooling fluid C moving along the 2^{nd}-1 fluid passage F₂₁ illustrated in FIG. 12 in which the rotatable chamber 150 does not rotate. When the flow speed of the cooling fluid C moving along the 2^{nd}-2 fluid passage F₂₂ at which the driving motor 141 is arranged increases, the cooling capacity of the cooling fluid C may increase. Thus, it may be identified that the temperature of the driving motor 141 may be maintained to be low, with the heat generated from the driving motor 141 being emitted by the cooling fluid C passing through the heat dissipation portion 157 with relatively increased efficiency.

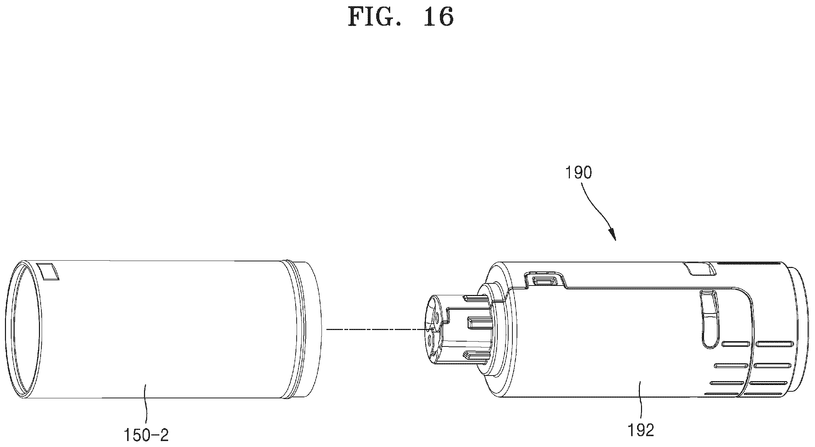

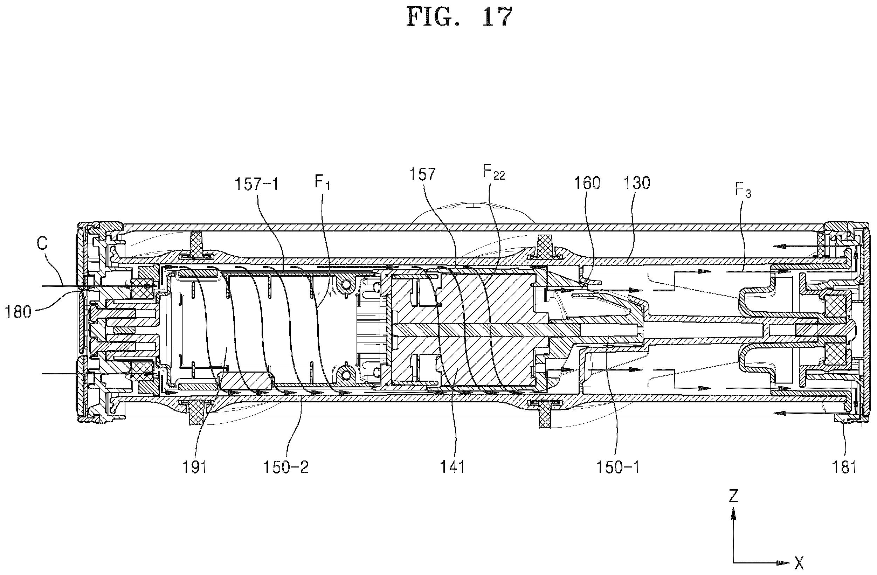

FIG. 16 is an exploded perspective view of a PCB module and a rotatable chamber, according to an embodiment of the disclosure. FIG. 17 is a cross-sectional view of a rotatable drum in which a cooling fluid circulates while a rotatable chamber rotates, according to an embodiment of the disclosure.

Referring to FIGS. 16 and 17, the rotatable chamber 150 according to an embodiment of the disclosure may be provided as a plurality. For example, a first rotatable chamber 150-1 may be arranged to surround the driving motor 141, and a second rotatable chamber 150-2 may be arranged to surround the PCB 191. Other configurations except the second rotatable chamber 150-2 surrounding the PCB 191 may be substantially the same as the configurations described with reference to FIG. 15, and thus, their descriptions are omitted here.

The PCB 191 according to an embodiment of the disclosure may be arranged between the cooling fluid inlet portion 180 and the driving motor 141. The PCB 191 may be supported by being inserted into the PCB support 192 having a pipe shape. The second rotatable chamber 150-2 according to an embodiment of the disclosure may be arranged to surround the PCB support 192 supporting the PCB 191. The second rotatable chamber 150-2 may rotate coaxially with the axis O around which the rotatable drum 130 rotates.

When the second rotatable chamber 150-2 rotates coaxially with the axis O, a rotational force may be applied to the cooling fluid C moving through a heat dissipation portion 157-1 formed between the second rotatable chamber 150-2 and the PCB support 192. When the rotational force is applied to the cooling fluid C moving through the heat dissipation portion 157-1, the first fluid passage F₁ provided in the second rotatable chamber 150-2 may be changed to be spiral and the flow speed of the cooling fluid C may increase.

When the flow speed of the cooling fluid C moving along the first fluid passage F₁ at which the PCB 191 is arranged increases, the cooling capacity of the cooling fluid C may increase. Thus, heat generated from the PCB 191 may be discharged by the cooling fluid C passing through the heat dissipation portion 157-1 with relatively increased efficiency. According to the embodiment of the disclosure described above, the plurality of rotatable chambers 150-1 and 150-2 may be arranged to surround the PCB 191 or the driving motor 141, but the disclosure is not limited thereto. The rotatable chamber 150 according to an embodiment of the disclosure may be inserted into the rotatable drum 130 and may be arranged to surround an arbitrary member configured to generate heat, so as to increase the heat dissipation efficiency by using the cooling fluid C.

To understand the disclosure, reference numerals are described in the embodiments of the disclosure illustrated in the drawings, and specific terms are used to describe the embodiments of the disclosure. However, the disclosure is not limited by these specific terms, and the disclosure may include all elements which may be commonly thought of by one of ordinary skill in the art.

Particular executions described in the disclosure are according to embodiments of the disclosure and do not limit the scope of the disclosure by any means. Furthermore, the connecting lines, or connection portions shown in the various figures presented are intended to represent example functional relationships and/or physical couplings between the various elements. It should be noted that many alternative or additional functional relationships or physical connections may be present in a practical device. Also, unless the terms "essential," "important," etc. are specifically mentioned, the elements may not be necessarily required for implementation of the disclosure. The expressions "including," "providing," etc. used herein may be understood as open-type terms.

The expression "the" and other similar referring expressions used in the specification of the disclosure (particularly, in the claims) may refer to both singular and plural elements. Also, when a range of the disclosure is described, the disclosure may include separate values within the range (unless there is a description contrary thereto), and it may correspond to the detailed description of the disclosure in which all of the separate values are described. Lastly, operations included in a method according to the disclosure may be performed in an appropriate order, unless the operations are described to be performed in an apparent order, or unless the operations are described to be performed otherwise. The disclosure is not necessarily limited by the described order of the operations. In this disclosure, the use of all examples or example terms (for example or etc.) is merely to describe the disclosure in detail, and unless defined so by the scope of the claims, the scope of the disclosure is not limited by these examples or example terms. Also, one of ordinary skill in the art may clearly understand that various modifications and changes may be easily realized without deviating from the scope and the concept of the disclosure.

A cleaning device according to an embodiment of the disclosure includes a suction device configured to suck in a pollutant from a surface to be cleaned; and a main body configured to collect the pollutant sucked in through the suction device, wherein the suction device includes a rotatable drum rotatable around an axis and having a hollow portion, a driving motor disposed in the hollow portion of the rotatable drum and configured to apply a rotational force to the rotatable drum to rotate the rotatable drum around the axis, a rotatable chamber surrounding the driving motor and disposed between the rotatable drum and the driving motor, the rotatable chamber rotatable coaxially with the axis, and a cooling fluid discharge hole 160 at a first end of the rotatable chamber to discharge the cooling fluid to an outside of the rotatable chamber.

The cleaning device according to an embodiment of the disclosure may further include a cooling fluid passage extending from a second end of the rotatable chamber opposite the first end of the rotatable chamber to the cooling fluid discharge hole so that the cooling fluid moves from the second end of the rotatable chamber to the first end of the rotatable chamber when a suction force is applied to the suction device.

The driving motor may include an outer surface, the rotatable chamber may include an inner surface, and the rotatable chamber may be spaced apart from the driving motor so as to form a heat dissipation portion between the outer surface of the driving motor and the inner surface of the rotatable chamber through which the cooling fluid moves.

The cooling fluid may be air.

A cross section of the rotatable chamber in a plane perpendicular to a direction the axis extends, may have a circular shape, and the cooling fluid discharge hole may include a plurality of cooling fluid discharge holes which may be spaced apart from each other by a predetermined distance in a circumferential direction of the circular shape.

The plurality of cooling fluid discharge holes may have an area of greater than or equal to 15 mm² and less than or equal to 60 mm², and the plurality of cooling fluid discharge holes may be arranged apart from each other by an angle of from greater than or equal to 10 degrees to less than or equal to 180 degrees in the circumferential direction of the circular shape.

A cross section of the rotatable chamber in a plane perpendicular toa direction the axis extends, may have a circular shape, and the cooling fluid discharge hole may be spaced apart from a central portion of the circular shape by a first distance in a radial direction of the circular shape.

The first distance may be greater than or equal to 5 mm and less than or equal to 25 mm.

A cross section of the rotatable chamber in a plane perpendicular toa direction the axis extends, may have any one of a circular shape and a polygonal shape.

The rotatable drum may be configured to rotate around the axis at a speed of greater than or equal to 1500 rpm and less than or equal to 4500 rpm.

The driving motor and the rotatable chamber may be configured to be sequentially inserted into the hollow portion of the rotatable drum, the driving motor may be configured to transmit the rotational force to the rotatable chamber, and the rotatable chamber may be configured to transmit the rotational force to the rotatable drum.

The cleaning device according to an embodiment of the disclosure may further include a cooling fluid inlet portion at an end of the rotatable drum through which the cooling fluid may be introduced into the rotatable drum when a suction force is applied by the suction device.

The cleaning device according to an embodiment of the disclosure may further include a cooling fluid outlet portion at an end of the rotatable drum to discharge the cooling fluid to an outside of the rotatable drum when a suction force is applied to the suction device.

The cleaning device according to an embodiment of the disclosure may further include a printed circuit board (PCB) between the cooling fluid inlet portion and the driving motor; and an additional rotatable chamber surrounding the PCB and disposed between the rotatable drum and the PCB, the additional rotatable chamber rotatable coaxially with the axis.

The cleaning device according to an embodiment of the disclosure may further include a brush extending a predetermined length from an outer circumferential surface of the rotatable drum.

## Claims

1. A cleaning device comprising:
a suction device 100 configured to suck in a pollutant from a surface to be cleaned, and
a main body 10 configured to collect the pollutant sucked in through the suction device,
wherein the suction device includes:
a rotatable drum 130 rotatable around an axis and having a hollow portion,
a driving motor 141 disposed in the hollow portion of the rotatable drum and configured to apply a rotational force to the rotatable drum to rotate the rotatable drum around the axis,
a rotatable chamber 150 surrounding the driving motor and disposed between the rotatable drum and the driving motor, the rotatable chamber rotatable coaxially with the axis, and
a cooling fluid discharge hole 160 at a first end of the rotatable chamber to discharge the cooling fluid to an outside of the rotatable chamber.

2. The cleaning device of claim 1, further comprising:
a cooling fluid passage extending from a second end of the rotatable chamber opposite the first end of the rotatable chamber to the cooling fluid discharge hole so that the cooling fluid moves from the second end of the rotatable chamber to the first end of the rotatable chamber when a suction force is applied to the suction device.

3. The cleaning device of claim 1 or claim 2, wherein
the driving motor includes an outer surface 1410,
the rotatable chamber includes an inner surface 1531, and
the rotatable chamber is spaced apart from the driving motor so as to form a heat dissipation portion 157 between the outer surface of the driving motor and the inner surface of the rotatable chamber through which the cooling fluid moves.

4. The cleaning device of any one of claims 1-3, wherein the cooling fluid is air.

5. The cleaning device of any one of claims 1-4, wherein
a cross section of the rotatable chamber 150 in a plane perpendicular to a direction the axis extends, has a circular shape, and
the cooling fluid discharge hole 160 includes a plurality of cooling fluid discharge holes spaced apart from each other by a predetermined distance in a circumferential direction of the circular shape.

6. The cleaning device of any one of claims 1-5, wherein
the plurality of cooling fluid discharge holes 160 have an area of greater than or equal to 15 mm² and less than or equal to 60 mm², and
the plurality of cooling fluid discharge holes 160 are arranged apart from each other by an angle of from greater than or equal to 10 degrees to less than or equal to 180 degrees in the circumferential direction of the circular shape.

7. The cleaning device of any one of claims 1-6, wherein
a cross section of the rotatable chamber in a plane perpendicular toa direction the axis extends, has a circular shape, and
the cooling fluid discharge hole is spaced apart from a central portion of the circular shape by a first distance in a radial direction of the circular shape.

8. The cleaning device of claim 7, wherein the first distance is greater than or equal to 5 mm and less than or equal to 25 mm.

9. The cleaning device of any one of claims 1-8, wherein a cross section of the rotatable chamber 150 in a plane perpendicular to a direction the axis extends, has any one of a circular shape and a polygonal shape.

10. The cleaning device of any one of claims 1-9, wherein the rotatable drum 130 is configured to rotate around the axis at a speed of greater than or equal to 1500 rpm and less than or equal to 4500 rpm.

11. The cleaning device of any one of claims 1-10, wherein
the driving motor 141 and the rotatable chamber 150 are configured to be sequentially inserted into the hollow portion of the rotatable drum 130,
the driving motor 141 is configured to transmit the rotational force to the rotatable chamber 150, and
the rotatable chamber 150 is configured to transmit the rotational force to the rotatable drum 130.

12. The cleaning device of any one of claims 1-11, further comprising:
a cooling fluid inlet portion 180 at an end of the rotatable drum through which the cooling fluid is introduced into the rotatable drum when a suction force is applied to the suction device.

13. The cleaning device of any one of claims 1-12, further comprising a cooling fluid outlet portion 181 at an end of the rotatable drum to discharge the cooling fluid to an outside of the rotatable drum when a suction force is applied to the suction device.

14. The cleaning device of claim 12, further comprising:
a printed circuit board (PCB) 191 between the cooling fluid inlet portion and the driving motor; and
an additional rotatable chamber 150-2 surrounding the PCB and disposed between the rotatable drum and the PCB, the additional rotatable chamber rotatable coaxially with the axis.

15. The cleaning device of any one of claims 1-14, further comprising a brush 137 extending a predetermined length from an outer circumferential surface of the rotatable drum.
